# EUROPÄISCHE PATENTSCHRIFT

(11) **EP 1 050 435 B1**
(45) Veröffentlichungstag und Bekanntmachung des Hinweises auf die Patenterteilung: **08.10.2008**
(21) Anmeldenummer: 00104600.2
(22) Anmeldetag: 15.03.2000
(51) Int. Cl.: B60R 1/12

(54) **Abstandssensorik für ein Kraftfahrzeug**
Distance sensor for a vehicle
Capteur de distance pour un véhicule

(30) Priorität: 06.07.1999 DE 19931014; 03.05.1999 DE 19920218
(43) Veröffentlichungstag der Anmeldung: 08.11.2000
(73) Patentinhaber: Volkswagen Aktiengesellschaft, 38436 Wolfsburg (DE)
(72) Erfinder: Schneider, Arthur, Ing., 38112 Braunschweig (DE)

(56) Entgegenhaltungen:
- EP-A- 0 381 016
- EP-A- 0 673 802
- WO-A-98/34131
- DE-A- 2 839 848
- DE-A- 19 749 363
- FR-A- 2 551 005

## Beschreibung

Die Erfindung betrifft eine Abstandssensorik für ein Kraftfahrzeug.

Aufgrund der zunehmenden Verkehrsdichte wurden verstärkt Versuche unternommen, Fahrer-Assistenz-Systeme zu schaffen, die den Kraftfahrzeugführer während der Fahrt entlasten. Beispiele für solche Fahrer-Assistenz-Systeme sind ADR-Systeme, Systeme zur Erkennung von Objekten im "Toten Winkel" eines Kraftfahrzeuges, Precrash-Systeme oder Fahrspurwechsel-Assistenzsysteme.

Aus der DE 28 39 848 ist eine Radarsensorik zur Überwachung des seitlichen und rückwärtigen Bereiches eines Kraftfahrzeuges bekannt, wobei mindestens ein Antennenreflektor im Spiegelgehäuse im Bereich zwischen dem Spiegelglas und der Öffnung des Spiegelgehäuses angeordnet ist. Der Antennenreflektor ist aus einem lichtdurchlässigen Material hergestellt, um das vom Spiegelglas des Außenrückspiegels reflektierte Bild hindurchzulassen. Durch den Wegfall eines gesonderten Antennenreflektors wird das optische Erscheinungsbild der Fahrzeugkarosserie nicht gestört. Aufgrund der Form der möglichen Abstrahlcharakteristik ist die bekannte Radarsensorik jedoch nur bedingt verwendbar als Bestandteil einer Fahrspurwechsel-Assistenz-Einrichtung oder eines Precrash-Systems.

Aus der DE 28 39 849 ist ein Außenrückspiegel für Kraftfahrzeuge mit einem am vorderen Teil der Fahrzeugkarosserie befestigbaren hohlen Spiegelfuß, einem Spiegelgehäuse mit einem in Fahrtrichtung weisenden vorderen Endabschnitt und einem entgegen der Fahrtrichtung weisenden vorderen Endabschnitt und einem entgegen der Fahrtrichtung weisenden hinteren Endabschnitt, sowie mit einem im Innern des Spiegelgehäuses im Bereich des hintere Endabschnittes schwenkbar gelagerten Spiegelglases bekannt, wobei innerhalb des Spiegelgehäuses im Bereich seines vorderen Endabschnittes eine durch eine Haube nach vorn abgedeckte Radaranlage angeordnet ist, wobei sowohl am linken vorderen Kotflügel als auch am rechten vorderen Kotflügel des Kraftfahrzeuges in gleichem Abstand von der Fahrzeuglängsachse und in gleicher Höhe gegenüberliegend jeweils ein Außenrückspiegel mit einer Radaranlage befestigt ist. Dadurch werden keine gesonderten Aufnahmeräume für die Radaranlagen und Anbringungsorte für die zugehörigen Antennenreflektoren am Kraftfahrzeug benötigt, die das Erscheinungsbild der Fahrzeugkarosserie stören würden und gegenüber Beschädigungen besonders anfällig wären. Durch die bekannte Radaranlage läßt sich der vordere Verkehrsraum relativ gut erfassen.

Aus der EPO 0 381 016 A1 ist ein Außenspiegel für ein Kraftfahrzeug mit einem Spiegelgehäuse bekannt, in welchem ein Rückspiegel gehalten und mittels eines Fußes am Fahrzeug befestigbar ist, wobei am Spiegelgehäuse ein Sendeempfänger für elektromagnetisch bestimmte Frequenz, dessen Antenne gegen Fahrtrichtung des Kraftfahrzeuges gerichtet ist, befestigbar ist, welchem eine Auswerteschaltung mit optischer und/oder akustischer Anzeigevorrichtung nachgeschaltet ist. Die Abstandssensorik gestattet eine Erfassung von Fahrzeugen, die sich schräg hinter dem Fahrzeug des Fahrers unter Einschluß des toten Winkels befinden, wobei die Größe der Doppler-Verschiebung der Empfangssignalfrequenz relativ zur Sendesignalfrequenz zur Diskriminierung der Relativgeschwindigkeit des vom Sendeempfänger erfaßten Fahrzeuges zum Fahrzeug des Fahrers herangezogen werden kann. Die optische Anzeigevorrichtung kann dabei im nach vorne gerichteten Blickwinkel des Fahrers vorgesehen sein, und eine gegebenenfalls zusätzliche akustische Anzeigevorrichtung in Form eines Summers kann im Innern des Fahrzeugs angeordnet und geeignet sein, den Fahrer beispielsweise vor einem Fahrbahnwechsel zu warnen.

Die vom Sendeempfänger abgegebene Strahlung kann im Radarbereich, im Ultrarotbereich liegen. Alternativ kommt auch ein Ultraschall-Sendeempfänger in Betracht.

Zweckmäßig ist der Sendeempfänger in einem gegen die Fahrtrichtung offenen Ansatz beherbergt, der an einen fußfernen Teil des Spiegelgehäuses angeformt ist. Die Auswerteschaltung, die mit den zugehörigen elektronischen Bauteilen auf einem Chip aufgebaut ist, kann zweckmäßig in einem hohlen Teil des Spiegelfußes untergebracht sein, so daß sie keinerlei zusätzlichen Raum beansprucht und vor Witterungseinflüssen geschützt ist.

In der WO 98/34131 A1 ist eine Anordnung zur Warnung eines Fahrers eines Fahrzeuges bei sicherheitskritischer Position bzw. sicherheitskritischem Abstand eines zweites Fahrzeuges oder eines Objektes offenbart, wobei eine Lasersensoranordnung zur Erfassung eines Objektes oberhalb oder seitlich des Spiegelglases eines Rückspiegels vorgesehen ist. Bei der Sensoranordnung sind die Sendeelemente und das Empfangselement mit der jeweils davor befindlichen Linse fest oberhalb oder seitlich des Spiegelglases angeordnet. Somit ist es nur möglich, die Sensoranordnung derart am Außenspiegel zu befestigen, dass diese entweder den Raum seitlich des Fahrzeuges nach vorn oder nach hinten überdacht.

Alle diese bekannte Vorrichtungen sind daher nicht geeignet, den vollständigen seitlichen Bereich des Kraftfahrzeuges zu erfassen.

Für Anwendungsfälle, in denen der seitliche Bereich erfaßt werden muß bzw. in Systemen, in denen die Abstandssensorik universell Daten für unterschiedliche Assistenz-Systeme liefern soll, werden eine Vielzahl von Abstandssensoren um das Kraftfahrzeug herum angeordnet. Dabei werden die einzelnen Abstandssensoren entsprechend ihrer Position mit unterschiedlichen Reichweiten und/oder Auflösungen ausgebildet. Nachteilig an diesen Abstandssensoriken ist, daß die um das Kraftfahrzeug herum angeordneten Sensoren an der Karosserie oder Zierleisten angeordnet werden müssen, was entsprechende mechanische Vorhaltungen notwendig macht. Zum anderen sind die Sensoren somit an Stellen angeordnet, wo diese sehr leicht durch Unfall oder Vandalismus beschädigt werden können.

Der Erfindung liegt daher das technische Problem zugrunde, eine Abstandssensorik zu schaffen, die mindestens nahezu den gesamten seitlichen Bereich eines Kraftfahrzeuges erfaßt, ohne den ästhetischen Gesamteindruck des Kraftfahrzeuges zu stören.

Die Lösung des technischen Problems ergibt sich durch die Merkmale der unabhängigen Patentansprüche. Weitere vorteilhafte Ausgestaltungen der Erfindung ergeben sich aus den Unteransprüchen

Durch die Ausbildung des Abstandssensors als Laserscanner, der in einem Drehgelenk, einem Längs- oder Querträger des Spiegelgehäuses oder im Spiegelgehäuse selbst angeordnet ist läßt sich mit einem einzigen Sensor der gesamte seitliche Bereich des Kraftfahrzeuges erfassen. Hierfür besteht das den Laserscanner umgebende Material im Lichtaustriftsbereich des Laserscanners aus einem für die Wellenlänge des Laserscanners lichtdurchlässigem Material. Bei der im Spiegelgelenk ergibt sich darüber hinaus der Vorteil, daß der Laserscanner mechanisch geschützt in vorhandenen Bauraum integriert und optisch verdeckt wird. Ein weiterer Vorteil ist, daß der Laserscanner durch eine Verstellung des Außenspiegels in seiner Position nicht verändert wird und somit stets in einer definierten Lage sich befindet.

Bei einer Anordnung im oder am Längsträger des Gehäuses ist der Laserscanner maximal von der Karosserie des Kraftfahrzeuges entfernt, wodurch der erfaßbare Scanbereich maximiert wird.

Bei einer Anordnung im Spiegelgehäuse ist insbesondere der Vorteil, daß der Laserscanner optisch überhaupt nicht mehr wahrnehmbar ist und somit den ästhetischen Gesamteindruck nicht negativ beeinflußt.

Um den Laserstrahl des Laserscanners sowenig wie möglich zu beeinflussen, ist der Laserscanner vorzugsweise derart im Spiegelgelenk angeordnet, daß die Scanebene, also die vom Laserstrahl überstrichene Ebene, sich oberhalb oder unterhalb des Spiegelgehäuses befindet.

Hierzu kann der Laserscanner entsprechend aus dem Spiegelgelenk im Bereich des Lichtaustritts herausragen, oder aber das Gelenk überragt entsprechend das Gehäuse.

In einer weiteren bevorzugten Ausführungsform ist die Scanebene derart ausgerichtet, daß die Motorhaube überstrichen wird. Dies ermöglicht erfaßbare Scanbereiche zwischen 200 - 240° so daß fast der gesamte vordere Verkehrsraum miterfaßt wird. Wird eine derartige Abstandssensorik in beiden Außenspiegeln integriert, so wird neben den beiden seitlichen Bereichen der gesamte vordere Verkehrsraum überwacht. Durch die dezentrale Position der Laserscanner können so neben dem unmittelbar vorausfahrenden Kraftfahrzeug auch davor befindliche Kraftfahrzeuge miterfaßt werden.

Da der eigentliche Laserscanner bereits oft in einem stabilen Gehäuse angeordnet ist, kann der Laserscanner selbst als Spiegelgelenk oder Teil der Befestigung verwendet werden. Gegebenenfalls benötigte elektrische Zuleitungen für elektrische Komponenten im Außenspiegel können dabei sehr einfach über die vorhandenen Kabelführungen im Laserscanner vom Kraftfahrzeuginnenraum in den Außenspiegel geführt werden

Nach einer vorteilhaften Ausbildung der Erfindung ist vorgesehen, sowohl im bzw. am linken als auch im oder am rechten Außenspiegel des Kraftfahrzeuges einen Laserscanner vorzusehen. Dies hat den Vorteil, daß auch Objekte vor dem Fahrzeug, die teilweise durch andere Objekte vor dem Fahrzeug verdeckt werden, mit hoher Wahrscheinlichkeit detektiert werden, das heißt, daß nicht nur der "direkte Vordermann" erkannt wird.

Zusätzlich kann vorgesehen sein, daß die Abstrahlwinkel der Laserscanner im rechten und linken Außenspiegel zumindest im Scanbereich vor dem Kraftfahrzeug in Bezug zur Fahrbahn unterschiedlich sind. Dadurch ist es möglich, die Erkennungssicherheit von Objekten bei durch Beschleunigung bzw. Bremsung des Kraftfahrzeuges auftretenden Nickbewegungen zu verbessern.

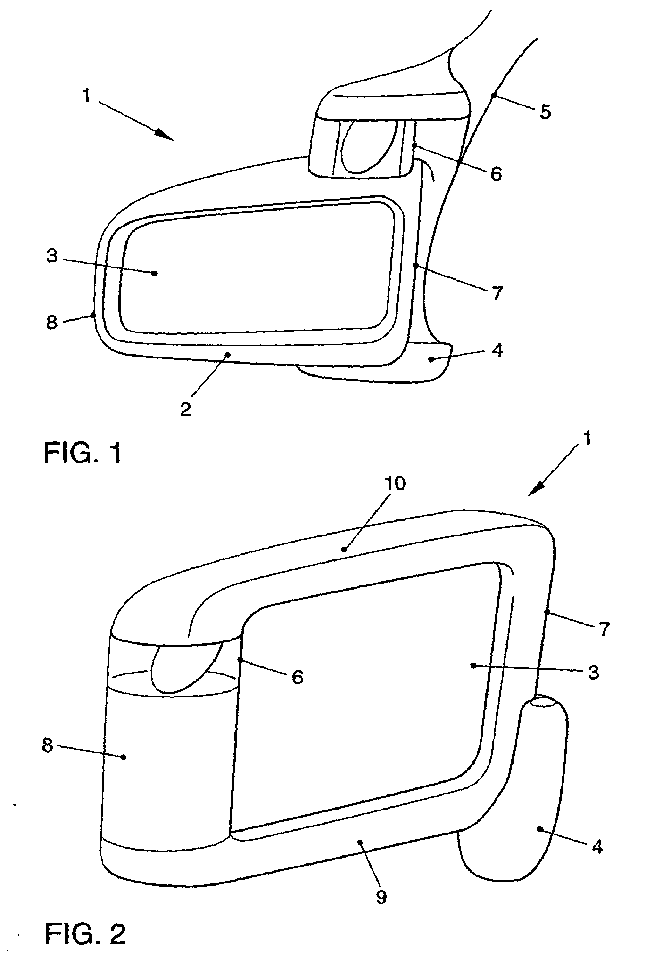

Die Erfindung wird nachfolgend anhand eines bevorzugten Ausführungsbeispiels näher erläutert. Die Fig. zeigen:
- Fig.: 1 eine Perspektivdarstellung eines Außenspiegels mit integriertem Laserscanner im Spiegelgelenk
- Fig. 2: eine Perspektivdarstellung eines Außenspiegels mit integriertem Laserscanner in einem Längsträger des Außenspiegels und
- Fig.: 3 eine Darstellung eines Fahrzeuges mit zwei Laserscannern.

Der Außenspiegel 1 umfaßt ein Spiegelgehäuse 2, ein Spiegelglas 3 und ein Spiegelgelenk 4. Das Spiegelgelenk 4 ist entweder direkt oder über ein weiteres nicht dargestelltes Befestigungsmittel an der Karosserie 5 eines Kraftfahrzeuges, insbesondere der A-Säule angeordnet. In dem Spiegelgelenk 4 ist ein Laserscanner 6 angeordnet, dessen Form vorzugsweise dem Spiegelgelenk 4 angepaßt ist. Das Spiegelgelenk 4 und der darin integrierte Laserscanner 6 sind von ihren Längsabmessungen größer als die beiden Längsträger 7, 8 des Spiegelgehäuses 2. In dem das Spiegelgehäuse 2 überragenden Bereich ist das Spiegelgelenk 4 für die Wellenlänge des Laserscanners 6 aus einem lichtdurchlässigen Material ausgebildet und der Lichtaustrittsbereich des Laserscanners 6 angeordnet. Dadurch kann der Laserstrahl des Laserscanners 6 eine Scan-Ebene überstreichen, die nicht durch das Spiegelgehäuse 2 geschnitten wird. Darüber hinaus kann der beispielsweise zylinderförmig ausgebildete Laserscanner 6 selbst das Spiegelgelenk 4 oder einen Teil davon bilden. Der Laserscanner 6 kann sowohl eine kontinuierliche 360° - Bewegung oder eine pendelnde Schwenkbewegung im interessierenden Beobachtungssektor durchführen. Bei einer kontinuierlichen 360°- Bewegung gibt es prinzipiell zwei verschiedene Betriebsmöglichkeiten. Zum einen kann der Laserscanner in den Winkellagen, wo der Laserstrahl auf das Kraftfahrzeug selbst treffen würde, abgeschaltet werden. Eine andere Möglichkeit besteht darin, den Laserscanner 6 in diesen Winkelbereichen zur Innenraumüberwachung des Kraftfahrzeuges zu nutzen. In diesem Fall wird in den fraglichen Winkelbereichen der Laserscanner 6 mit einer reduzierten Sendeleistung betrieben. Wird der Lichtaustrittsbereich des Laserscanners 6 derart bezüglich seiner Höhenlage ausgerichtet, daß die Scanebene die Motorhaube des Kraftfahrzeuges überstreicht, so kann die Fahrzeugumgebung in einem Winkelbereich von 200-240° vollständig erfaßt werden, so daß dann bei Integration der Abstandssensorik in beide Außenspiegel der gesamte vordere Verkehrsraum miterfaßt wird. Eine weitere Möglichkeit besteht darin, den Lichtaustrittsbereich des Laserscanners 6 unterhalb des Spiegelgehäuses 2 anzuordnen, so daß der Laserscanner 6 für die Fahrzeuginsassen optisch nicht wahrnehmbar ist. Solange dabei gewährleistet ist, daß die Scanebene oberhalb der Motorhaube liegt, ergeben sich dadurch keinerlei technische Einschränkungen. Ansonsten wird nur der gesamte seitliche Bereich des Kraftfahrzeuges erfaßt

In der Fig. 2 ist eine alternative Ausführungsform dargestellt, bei der der Laserscanner 6 in den Längsträger 8 des Spiegelgehäuses 2 integriert ist. Bei dieser Ausführungsform schneidet ein Teil des Spiegelgehäuses 2 die Scanebene, so daß dieser Bereich für die Auswertung nicht zur Verfügung steht. Der Vorteil dieser Anordnung ist der sehr geschlossene Gesamteindruck, da der Laserscanner 6 sich optisch in die Form des Spiegelgehäuses 2 einpaßt und somit den ästhetischen Gesamteindruck nicht stört. Ein weiterer Vorteil ist, daß durch den vergrößerten Abstand zur Karosserie der erfaßbare Winkelbereich im vorderen Verkehrsraum vergrößert wird. Des weiteren ist es somit nicht nur möglich, ein unmittelbar vorausfahrendes Kraftfahrzeug zu erfassen, sondern auch mindestens ein davor sich bewegendes Kraftfahrzeug zusätzlich mitzuerfassen.

Ebenso wie in der Ausführungsform gemäß Fig. 1 ist es möglich, den Lichtaustrittsbereich des Laserscanners 6 über oder unter das Spiegelgehäuse 2 ragen zu lassen.

In einer weiteren nicht dargestellten Variante kann der Laserscanner 6 auch im Spiegelgehäuse 2 hinter dem Spiegelglas 3 angeordnet werden, so daß der Laserscanner 6 von außen nicht sichtbar ist. Das Spiegelgehäuse 2 ist dann aus einem im Wellenlängenbereich des Laserscanners 6 lichtdurchlässigen Material ausgebildet und das Spiegelglas derart beschichtet, daß dieses ebenfalls für diese Wellenlänge durchlässig ist. Zur Verbesserung des Transmissionsverhaltens wird der Laserscanner 6 vorzugsweise möglichst nahe am Längsträger 8 angeordnet.

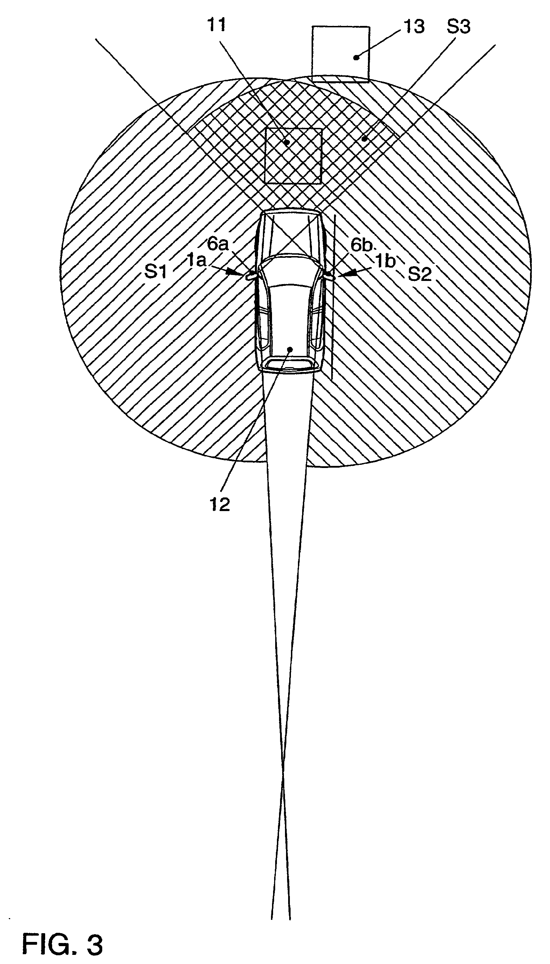

Fig. 3 zeigt ein Fahrzeug 12, bei dem in jedem der beiden Außenspiegel 1 ein Laserscanner 6 integriert ist. Der sich damit vergrößernde Scanbereich, der sich aus dem Scanbereich S1 des im linken Außenspiegel 1a angeordneten Laserscanners 6a und dem Scanbereich S2 des im rechten Außenspiegel 6b angeordneten Laserscanners 6b ergibt, ermöglicht einmal die Umgebung im weitesten Sinne "rund" um das Fahrzeug zu überwachen, zusätzlich werden aber auch beim Einsatz für eine Abstandsregelung sicher solche Fahrzeuge 11 bzw. Objekte vor dem eigenen Fahrzeug 12 delektiert, die von anderen Fahrzeugen 13 bzw. Objekten teilweise verdeckt werden.

Werden zusätzlich die Abstrahlwinkel der beiden Laserscanner 6a und 6b zumindest im Scanbereich S3 vor dem eigenen Fahrzeug 12 in Bezug zur Fahrbahn unterschiedlich gewählt, erhöht sich die Erkennungssicherheit bei Nickbewegungen des eigenen Fahrzeuges 12.

### BEZUGSZEICHENLISTE

- 1): Außenspiegel
- 2): Spiegelgehäuse
- 3): Spiegelglas
- 4): Spiegelgelenk
- 5): Karosserie
- 6): Laserscanner
- 7): Längsträger
- 8): Längsträger
- 9): Querträger
- 10): Querträger
- 11): Fahrzeug
- 12): Fahrzeug
- 13): Fahrzeug
- 14): Scanbereich
- 15): Scanbereich
- 16): Scanbereich

## Patentansprüche

1. Kraftfahrzeug mit mindestens einem Außenspiegel (1), an dem eine Abstandssensorik angeordnet ist, die mindestens den seitlichen Bereich des Kraftfahrzeuges erfasst,
wobei die Abstandssensorik einen als Laser ausgebildeten Abstandssensor umfasst und ein Teil des Außenspiegels (1) einen Lichtaustrittsbereich aus einem für die Wellenlänge des Lasers lichtdurchlässigem Material aufweist,
**dadurch gekennzeichnet, dass**
der Laser als Laserscanner (6) ausgebildet ist, der mindestens nahezu den gesamten seitlichen Bereich des Kraftfahrzeuges erfasst und in einem Spiegelgelenk (4) des Außenspiegels (1) angeordnet ist, wobei das Spiegelgelenk (4) mindestens im Lichtaustrittsbereich des Laserscanners (6) ein für die Wellenlänge des Laserscanners (6) lichtdurchlässiges Material aufweist.

2. Kraftfahrzeug mit mindestens einem Außenspiegel (1) nach Anspruch 1,
**dadurch gekennzeichnet, dass**
der Laserscanner (6) derart zum Spiegelgehäuse (2) ausgerichtet ist, dass die Scan-Ebene des Laserscanners (6) ober- oder unterhalb des Spiegelgehäuses (2) liegt.

3. Kraftfahrzeug mit mindestens einem Außenspiegel (1) nach Anspruch 1 oder 2,
**dadurch gekennzeichnet, dass**
die Scan-Ebene des Laserscanners (6) oberhalb einer Motorhaube des Kraftfahrzeuges liegt.

4. Kraftfahrzeug mit mindestens einem Außenspiegel (1) nach einem der vorangegangen Ansprüche,
**dadurch gekennzeichnet, dass**
der Laserscanner (6) das Spiegelgelenk (4) oder einen Teil der Spiegelbefestigung bildet.

5. Kraftfahrzeug mit mindestens einem Außenspiegel (1), an dem eine Abstandssensorik angeordnet ist, die mindestens den seitlichen Bereich des Kraftfahrzeuges erfasst,
wobei die Abstandssensorik einen als Laser ausgebildeten Abstandssensor umfasst, der in oder an einem Längsträger (7, 8) oder in oder an einem Querträger (9, 10) des Spiegelgehäuses (2) angeordnet ist, wobei das Spiegelgehäuse (2) zumindest im Lichtaustrittsbereich des Lasers ein für die Wellenlänge des Lasers lichtdurchlässiges Material aufweist,
**dadurch gekennzeichnet, dass**
der Laser als Laserscanner (6) ausgebildet ist, der mindestens nahezu den gesamten seitlichen Bereich des Kraftfahrzeuges erfasst.

6. Kraftfahrzeug mit mindestens einem Außenspiegel (1) nach Anspruch 5,
**dadurch gekennzeichnet,dass**
die Scan-Ebene des Laserscanners (6) oberhalb oder unterhalb des Spiegelgehäuses (2) liegt.

7. Kraftfahrzeug mit mindestens einem Außenspiegel (1) nach einem der Ansprüche 5 oder 6,
**dadurch gekennzeichnet, dass**
die Scan-Ebene des Laserscanners (6) oberhalb einer Motorhaube des Kraftfahrzeuges liegt.

8. Kraftfahrzeug mit mindestens einem Außenspiegel (1) nach einem der Ansprüche 5 bis 7.
**dadurch gekennzeichnet, dass**
der Laserscanner (6) einen Teil des Spiegelgehäuses (2) bildet.

9. Kraftfahrzeug mit mindestens einem Außenspiegel (1), an dem eine Abstandssensorik angeordnet ist, die mindestens den seitlichen Bereich des Kraftfahrzeuges erfasst,
wobei die Abstandssensorik einen als Laser ausgebildeten Abstandssensor umfasst, der im Spiegelgehäuse (2) angeordnet ist, wobei das Spiegelgehäuse (2) zumindest im Lichtaustrittsbereich des Lasers ein für die Wellenlänge des Lasers lichtdurchlässiges Material aufweist,
**dadurch gekennzeichnet, dass**
der Laser als Laserscanner (6) ausgebildet ist, der mindestens nahezu den gesamten seitlichen Bereich des Kraftfahrzeuges erfasst und in einem Hohlraum (4) des Spiegelgehäuses (2) angeordnet ist, wobei das Spiegelglas zumindest teilweise im Wellenlängenbereich des Laserscanners (6) lichtdurchlässig ausgebildet ist.

10. Kraftfahrzeug mit mindestens einem Außenspiegel (1) nach Anspruch 9,
**dadurch gekennzeichnet, dass**
die Scan-Ebene des Laserscanners (6) oberhalb oder unterhalb des Spiegelgehäuses (2) gebildet ist

11. Kraftfahrzeug mit mindestens einem Außenspiegel (1) nach Anspruch 9 oder 10,
**dadurch gekennzeichnet, dass**
die Scan-Ebene des Laserscanners (6) oberhalb einer Motorhaube des Kraftfahrzeuges gebildet ist.

12. Kraftfahrzeug mit mindestens zwei Außenspiegeln (1), an denen jeweils eine Abstandssensorik angeordnet ist, die mindestens einen seitlichen Bereich des Kraftfahrzeuges erfasst, wobei jede Abstandssensorik einen als Laser ausgebildeten Abstandssensor umfasst,
**dadurch gekennzeichnet, dass**
die Laser als Laserscanner (6) ausgebildet sind, die mindestens nahezu die gesamten seitlichen Bereiche des Kraftfahrzeuges erfassen, wobei die Abstrahlwinkel der Laserscanner (6) zumindest im Scanbereich vor dem Kraftfahrzeug in Bezug zur Fahrbahn unterschiedlich sind.

## Claims

1. Motor vehicle having at least one exterior mirror (1) on which a distance sensor system, which senses at least the lateral region of the motor vehicle, is arranged, wherein the distance sensor system comprises a distance sensor which is embodied as a laser, and part of the exterior mirror (1) has a light exit region composed of a material which transmits light at the wavelength of the laser, **characterized in that** the laser is embodied as a laser scanner (6) which senses at least virtually the entire lateral region of the motor vehicle and is arranged in a mirror joint (4) of the exterior mirror (1), wherein the mirror joint (4) has, at least in the light exit region of the laser scanner (6), a material which is translucent at the wavelength of the laser scanner (6).

2. Motor vehicle having at least one exterior mirror (1) according to Claim 1, **characterized in that** the laser scanner (6) is aligned with the mirror housing (2) in such a way that the scanner plane of the laser scanner (6) is above or below the mirror housing (2).

3. Motor vehicle having at least one exterior mirror (1) according to Claim 1 or 2, **characterized in that** the scan plane of the laser scanner (6) is above an engine bonnet of the motor vehicle.

4. Motor vehicle having at least one exterior mirror (1) according to one of the preceding claims, **characterized in that** the laser scanner (6) forms the mirror joint (4) or part of the mirror attachment.

5. Motor vehicle having at least one exterior mirror (1) on which a distance sensor system, which senses at least the lateral region of the motor vehicle, is arranged, wherein the distance sensor system comprises a distance sensor which is embodied as a laser and which is arranged in or on a longitudinal beam (7, 8) or in or on a crossbeam (9, 10) of the mirror housing (2), wherein the mirror housing (2) has, at least in the light exit region of the laser, a material which is translucent at the wavelength of the laser, **characterized in that** the laser is embodied as a laser scanner (6) which senses at least virtually the entire lateral region of the motor vehicle.

6. Motor vehicle having at least one exterior mirror (1) according to Claim 5, **characterized in that** the scan plane of the laser scanner (6) is above or below the mirror housing (2).

7. Motor vehicle having at least one exterior mirror (1) according to one of Claims 5 or 6, **characterized in that** the scan plane of the laser scanner (6) is above an engine bonnet of the motor vehicle.

8. Motor vehicle having at least one exterior mirror (1) according to one of Claims 5 to 7, **characterized in that** the laser scanner (6) forms part of the mirror housing (2).

9. Motor vehicle having at least one exterior mirror (1) on which a distance sensor system, which senses at least the lateral region of the motor vehicle, is arranged, wherein the distance sensor system comprises a distance sensor which is embodied as a laser and which is arranged in the mirror housing (2), wherein the mirror housing (2) has, at least in the light exit region of the laser, a material which is translucent at the wavelength of the laser, **characterized in that** the laser is embodied as a laser scanner (6) which senses at least virtually the entire lateral region of the motor vehicle and is arranged in a cavity (4) in the mirror housing (2), wherein the mirror housing is embodied so as to be translucent at least partially in the wavelength range of the laser scanner (6).

10. Motor vehicle having at least one exterior mirror (1) according to Claim 9, **characterized in that** the scan plane of the laser scanner (6) is formed above or below the mirror housing (2).

11. Motor vehicle having at least one exterior mirror (1) according to Claim 9 or 10, **characterized in that** the scan plane of the laser scanner (6) is formed above an engine bonnet of the motor vehicle.

12. Motor vehicle having at least two exterior mirrors (1), on each of which a distance sensor system, which senses at least a lateral region of the motor vehicle, is arranged, wherein each distance sensor system comprises a distance sensor which is embodied as a laser, **characterized in that** the lasers are embodied as laser scanners (6) which sense at least virtually the entire lateral regions of the motor vehicle, wherein the radiation angles of the laser scanners (6) are different at least in the scanning region in front of the motor vehicle with respect to the carriageway.

## Revendications

1. Véhicule automobile comprenant au moins un rétroviseur extérieur (1) sur lequel est monté un dispositif de détection de distance qui balaye au moins la zone latérale du véhicule automobile, le dispositif de détection de distance comprenant un détecteur de distance réalisé sous la forme d'un laser et une partie du rétroviseur extérieur (1) présentant une zone de sortie de lumière dans un matériau transparent pour la longueur d'onde du laser, **caractérisé en ce que** le laser est réalisé sous la forme d'un dispositif de balayage à laser (6) qui balaye au moins quasiment la totalité de la zone latérale du véhicule automobile et qui est disposé dans une articulation de rétroviseur (4) du rétroviseur extérieur (1), l'articulation de rétroviseur (4) présentant au moins dans la zone de sortie de lumière du dispositif de balayage à laser (6) un matériau transparent pour la longueur d'onde du dispositif de balayage à laser (6).

2. Véhicule automobile comprenant au moins un rétroviseur extérieur (1) selon la revendication 1, **caractérisé en ce que** le dispositif de balayage à laser (6) est orienté par rapport au boîtier du rétroviseur (2) de telle sorte que le plan de balayage du dispositif de balayage à laser (6) se trouve au-dessus ou au-dessous du boîtier de rétroviseur (2).

3. Véhicule automobile comprenant au moins un rétroviseur extérieur (1) selon la revendication 1 ou 2, **caractérisé en ce que** le plan de balayage du dispositif de balayage à laser (6) se trouve au-dessus d'un capot moteur du véhicule automobile.

4. Véhicule automobile comprenant au moins un rétroviseur extérieur (1) selon l'une des revendications précédentes, **caractérisé en ce que** le dispositif de balayage à laser (6) forme l'articulation de rétroviseur (4) ou une partie de la fixation du rétroviseur.

5. Véhicule automobile comprenant au moins un rétroviseur extérieur (1) sur lequel est monté un dispositif de détection de distance qui balaye au moins la zone latérale du véhicule automobile, le dispositif de détection de distance comprenant un détecteur de distance réalisé sous la forme d'un laser qui est disposé dans ou sur un support longitudinal (7, 8) ou encore dans ou sur un support transversal (9, 10) du boîtier de rétroviseur (2), le boîtier de rétroviseur (2) présentant au moins dans la zone de sortie de la lumière du laser un matériau transparent pour la longueur d'onde du laser, **caractérisé en ce que** le laser est réalisé sous la forme d'un dispositif de balayage à laser (6) qui balaye au moins quasiment la totalité de la zone latérale du véhicule automobile.

6. Véhicule automobile comprenant au moins un rétroviseur extérieur (1) selon la revendication 5, **caractérisé en que** que le plan de balayage du dispositif de balayage à laser (6) se trouve au-dessus ou au-dessous du boîtier de rétroviseur (2).

7. Véhicule automobile comprenant au moins un rétroviseur extérieur (1) selon l'une des revendications 5 ou 6, **caractérisé en ce que** le plan de balayage du dispositif de balayage à laser (6) se trouve au-dessus' d'un capot moteur du véhicule automobile.

8. Véhicule automobile comprenant au moins un rétroviseur extérieur (1) selon l'une des revendications 5 à 7, **caractérisé en ce que** le dispositif de balayage à laser (6) forme une partie du boîtier de rétroviseur (2).

9. Véhicule automobile comprenant au moins un rétroviseur extérieur (1) sur lequel est monté un dispositif de détection de distance qui balaye au moins la zone latérale du véhicule automobile, le dispositif de détection de distance comprenant un détecteur de distance réalisé sous la forme d'un laser qui est disposé dans le boîtier de rétroviseur (2), le boîtier de rétroviseur (2) présentant au moins dans la zone de sortie de la lumière du laser un matériau transparent pour la longueur d'onde du laser, **caractérisé en ce que** le laser est réalisé sous la forme d'un dispositif de balayage à laser (6) qui balaye au moins quasiment la totalité de la zone latérale du véhicule automobile et qui est disposé dans un espace creux (4) du boîtier de rétroviseur (2), le verre du rétroviseur étant réalisé au moins partiellement transparent dans la longueur d'onde du dispositif de balayage à laser (6).

10. Véhicule automobile comprenant au moins un rétroviseur extérieur (1) selon la revendication 9, **caractérisé en ce que** le plan de balayage du dispositif de balayage à laser (6) se trouve au-dessus ou au-dessous du boîtier de rétroviseur (2).

11. Véhicule automobile comprenant au moins un rétroviseur extérieur (1) selon la revendication 9 ou 10, **caractérisé en ce que** le plan de balayage du dispositif de balayage à laser (6) se trouve au-dessus d'un capot moteur du véhicule automobile.

12. Véhicule automobile comprenant au moins deux rétroviseurs extérieurs (1) sur lesquels est à chaque fois monté un dispositif de détection de distance qui balaye au moins une zone latérale du véhicule automobile, chaque dispositif de détection de distance comprenant un détecteur de distance réalisé sous la forme d'un laser, **caractérisé en ce que** les lasers sont réalisés sous la forme de dispositifs de balayage à laser (6) qui balayent au moins quasiment la totalité des zones latérales du véhicule automobile, les angles d'irradiation des dispositifs de balayage à laser (6) par rapport à la chaussée étant différents au moins dans la zone de balayage devant le véhicule automobile.
